# EUROPEAN PATENT APPLICATION

(11) **EP 3 479 741 A1**
(43) Date of publication of application: **08.05.2019**
(21) Application number: 17820502.7
(22) Date of filing: 27.06.2017
(51) Int. Cl.: A47J 27/08, A47J 27/62, A47J 27/00, G01K 13/00

(54) **ELECTRIC COOKING APPLIANCE HAVING TEMPERATURE SENSOR AND AUTOMATIC OPENING/CLOSING DEVICE**

(30) Priority: 27.06.2016 KR 20160080342
(71) Applicant: Sammi Industrial Co., Seoul 07563 (KR)
(72) Inventor: KIM, Cha Sik, Seoul 07509 (KR)
(74) Representative: Caspary, Karsten
(86) International application number: PCT/KR2017/006748
(87) International publication number: WO 2018/004226

(57) **Abstract**

The present invention relates to an electric cooking appliance having a temperature sensor and an automatic opening/closing device, wherein a temperature sensor is installed inside a lid and above a hotplate and is elastically supported such that, by setting the temperature and time according to the cooking material, the degree of cooking of the cooking material, the taste thereof, and the texture thereof can be improved. The electric cooking appliance comprises: a temperature sensor installed on the lower portion of the interior of a lid so as to control the inner temperature of the electric cooking appliance; an automatic opening/closing device installed at the center of the inside the lid such that, according to the pressure, the same is opened and discharges stream or the same is closed and maintains a vacuum state; and a hotplate installed such that the same can be attached to/detached from the lower portion of the lid, a sealing ring being fastened to the outer periphery of the hotplate, wherein the temperature sensor comprises a fixed member fixed inside the lid by a bolt; a guide member coupled inside the fixed member; a temperature sensor tube installed on the lower portion of the guide member and provided with a temperature sensing portion for controlling the inner temperature of an inner pot of the electric cooking device; a temperature sensing element fixed/sealed inside the temperature sensor tube by epoxy; a spring installed inside the fixed member and the guide member so as to elastically support the guide member; a nut provided below the guide member such that the guide member can be supported; and a bolt and a temperature sensing insertion member fastened to the nut and the hotplate, respectively, such that the temperature sensor tube can be inserted and supported.

## Description

### [Technical Field]

The present invention relates to an electric cooking appliance having a temperature sensor and an automatic opening/closing device and, more particularly, to an electric cooking appliance having a temperature sensor and an automatic opening/closing device that is provided with the temperature sensor elastically supported against the interior of a lid and top of a hotplate, thereby allowing a temperature and time to be set according to a material to be cooked to improve a degree of cooking of the cooked material, taste thereof, and texture thereof.

### [Background Art]

Generally, a pressure cooker is configured to allow an internal pressure thereof to be increased by means of heating in a state of being closed, so that a boiling point is substantially higher than a boiling point at an atmospheric pressure state, thereby permitting a material to be sufficiently cooked. The pressure cooker is divided into a direct-fired cooker and an electrically heated cooker according to heating sources.

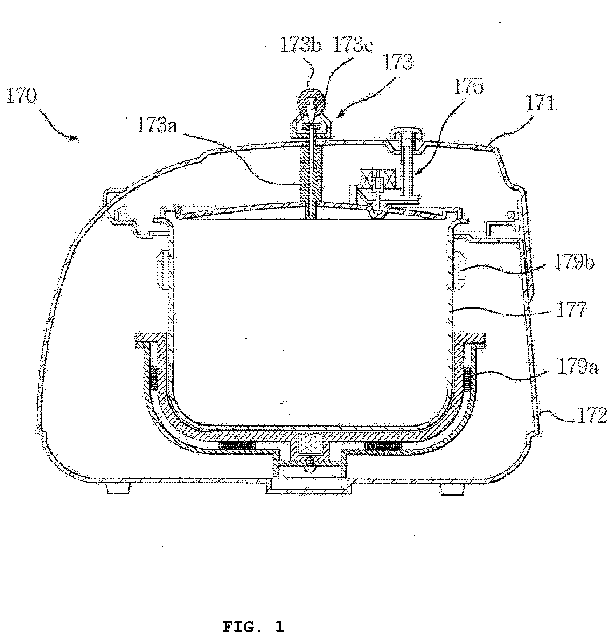

First, an explanation on a schematic structure of a conventional electric pressure cooker will be given with reference to FIG.1. The electric pressure cooker 170 includes a body 172, a lid 171, an oven 177 accommodated in the body 172, working coils 179a for heating the oven 177, a heater 179b for keeping warmth, and a steam discharger for adjusting a pressure in the oven 177 upon cooking.

The steam discharger includes a poise valve 173 and a solenoid valve 175 according to its function. The poise valve 173 is open if the pressure inside the oven 177 is over a given value during the cooking, thereby preventing the pressure from being excessively raised and at the same time allowing the pressure to be kept at the given value. The solenoid valve 175 is open by the control of a controller after a given period of time is passed from the start of the cooking, thereby lowering the pressure inside the oven 177.

The poise valve 173 includes a steam discharge tube 173a penetrated into the lid 171 and a pressure weight 173b disposed on top of the steam discharge tube 173a on the outside of the lid 171, and the pressure weight 173b has a valve pin 173c disposed at the interior thereof to open and close the steam discharge tube 173a.

Unlike the electric pressure cooker as shown in FIG.1, the direct-fired pressure cooker does not need the working coils 179a and the heater 179b, but has the poise valve 173 of the steam discharger. Instead of the solenoid valve 175, further, the direct-fired pressure cooker includes an auxiliary safety valve.

First, grains like rice, beans, etc. may be soaked in the water before they are cooked in the pressure cooker, and even after cooking, the cooked material may be frequently kept in the pressure cooker for a given period of time.

Even if the lid is closed to allow the pressure cooker to be kept sealed before or after the cooking, the cooked material may become rotten by means of various microorganisms such as bacteria, mold and yeast existing in the air of the cooker, and all kinds of aerobic microorganisms and facultative microorganisms may be increased in the cooker. Further, various chemical reactions like oxidation reactions between air molecules in the air and the food may be generated to make the food discolored.

Such problems may be solved when the pressure cooker becomes vacuumized.

One of conventional technologies related to the vacuumization of the pressure cooker is disclosed in Korean Patent No.0109950 (issued on December 30, 1996) entitled "device for vacuumizedly keeping warmth of electric pressure cooker", wherein a discharge hole is formed to forcedly discharge internal air, separately from a steam discharge hole formed on a lid, and after cooking, accordingly, the internal air is all discharged by means of a pump or push cap attached integrally to the device, thereby making the cooker vacuumized.

The conventional pressure cooker just keeps the warmth of the steamed rice after the rice has been steamed, thereby preventing the taste of the steamed rice from being changed and also avoiding the discoloration on the steamed rice.

Since the conventional pressure cooker is configured to have the vacuum device disposed integrally therewith, further, a new mold design and a change in the existing production line have to be needed, thereby causing a production cost to be increased and lowering cost competitiveness. In addition, the lid in the pressure cooker to which the vacuum device is fixed becomes complicated in structure, and accordingly, it is hard to willingly purchase the pressure cooker due to unfamiliarity in the function and design in the outer appearance of the pressure cooker. Since various kinds of electric pressure cookers have been already used in households, also, it is difficult to expect big sales.

In case of the conventional pressure cooker, it is necessary to introduce air into the pressure cooker so as to open the lid, but no detailed means for opening the lid has been suggested.

Another conventional technology is disclosed in Korean Patent Application Laid-open No.2000-0008520 (issued on February 7, 2000) entitled "method for vacuumizedly keeping warmth of electric pressure cooker", wherein the method includes the steps of selecting a vacuum and warmth-keeping mode and recognizing the vacuum and warmth-keeping mode, heating an oven and at the same time opening a path of a solenoid valve pipe by means of a solenoid valve, primarily sensing a lower temperature of the oven and comparing the sensed temperature value with a set temperature value in advance inputted, stopping heating of the oven if the primarily sensed temperature value is higher than or equal to the set temperature value, secondarily sensing the lower temperature of the oven and comparing the sensed temperature value with the set temperature value in advance inputted, and closing the path of the solenoid valve pipe by means of the solenoid valve if the secondarily sensed temperature value is lower than or equal to the set temperature value.

In the same manner as above, the conventional method for vacuumizedly keeping warmth of electric pressure cooker is designed just to prevent the taste of the steamed rice from being changed and also to avoid the discoloration on the steamed rice.

So as to keep the steamed rice warm for long hours in the conventional method, further, a pressure in the oven becomes higher than the atmospheric pressure, and after that, the pressure is immediately reduced lower than the atmospheric pressure to make the pressure cooker vacuumized, so that the vacuumization after the heating is repeatedly carried out and the number of repetition of the heating and vacuumizing is increased whenever the lid is open to draw the cooked material from the pressure cooker. Due to the repeated heating, the taste of the steamed rice becomes changed, and due to the repeated air discharging, a content of water in the steamed rice is decreased to undesirably make the steamed rice dry.

### [Disclosure]

### [Technical Problem]

Accordingly, the present invention has been made in view of the above-mentioned problems occurring in the prior art, and it is an object of the present invention to provide an electric cooking appliance having a temperature sensor and an automatic opening/closing device that is provided with the temperature sensor elastically supported against top of a hotplate by means of a spring and allows the hotplate to be easily detachably mounted onto a lid, thereby permitting a temperature to be easily set according to a material to be cooked, so that the cooked material has perfect taste, and also maximizing a user's conveniences.

### [Technical Solution]

To accomplish the above-mentioned object, according to the present invention, there is provided an electric cooking appliance having a temperature sensor and an automatic opening/closing device, including: the temperature sensor disposed at a lower portion of an interior of a lid to control an internal temperature thereof; the automatic opening/closing device disposed at an upper side of the interior of the lid and having an upper pressure adjusting part disposed thereon so that the upper pressure adjusting part is ascended according to a pressure to discharge steam, and if the pressure reaches a given pressure value, the upper pressure adjusting part is automatically sealed to keep a vacuum state; and a hotplate detachably mounted on the underside of the lid and having a sealing ring disposed along the outer circumference thereof, wherein if the lid is mounted thereon in such a manner as to allow the temperature sensor to be inserted thereinto, the upper pressure adjusting part of the automatic opening/closing device is accurately positioned at a lower sealing part and an upper vacuum releasing part of the automatic opening/closing device is accurately positioned at a lower vacuum sealing part, so that the vacuum state is maintained.

The temperature sensor includes: a fixed member fixed to the interior of the lid by means of bolts; a guide member coupled to the interior of the fixed member; a temperature sensor tube disposed on the lower side of the guide member and having a temperature sensing portion formed on the underside thereof to control an internal temperature of an inner pot of the electric cooking appliance; a temperature sensing element fixed to the interior of the temperature sensor tube by means of epoxy; a spring disposed at the interiors of the fixed member and the guide member to elastically support the guide member; a nut disposed on the underside of the guide member to support the guide member thereagainst; and a bolt and temperature sensor tube insertion member fastened to the nut and the hotplate in such a manner as to supportedly insert the temperature sensor tube thereinto.

The fixed member includes: bolt fastening pieces formed on both sides thereof in such a manner as to be fastened to the bolts; a coupling portion formed at the interior thereof in such a manner as to be coupled to the guide member; and a guide hole formed thereon to guide the guide member upward and downward.

The guide member includes: a spring seating portion formed at the interior thereof to seat the spring thereonto; and a guide bar disposed at the interior of the spring seating portion, in which the spring is seated, to guide the spring at the interior of the fixed member.

The bolt and temperature sensor tube insertion member includes: a temperature sensor tube insertion portion formed therein to insert the temperature sensor tube thereinto; and a temperature sensing surface formed on the bottom thereof in such a manner as to come into close contact with the underside of the temperature sensor tube to sense the temperature.

The automatic opening/closing device includes: a housing disposed inside the lid; a pressure opening/closing driver disposed inside the housing in such a manner as to be ascended and descended according to a steam pressure upon cooking to allow the upper pressure adjusting part to open and close a steam outlet of the lower sealing part; a vacuum releasing driver disposed inside the housing in such a manner as to be ascended and descended according to the rotation of a handle protruding outward from the lid to allow the upper vacuum releasing part to open and close an air inlet of the lower vacuum sealing part; springs disposed inside the pressure opening/closing driver and the vacuum releasing driver to elastically support the pressure opening/closing driver and the vacuum releasing driver; and a height operating connector disposed on top of the housing in such a manner as to be fixed to the handle to ascend and descend the vacuum releasing driver.

The hotplate includes: a lid detachable part disposed at the center of the lower portion of the lid to easily detachably mount the hotplate onto the lid; a handle disposed on the center of the underside thereof; and a connection bar disposed on the upper portion of the handle in such a manner as to be fastened to the lid detachable part by means of bolting.

The hotplate includes an upper heater disposed on the lower portion of the lid to transmit a temperature generated according to a cooking state so that a set temperature is adjusted.

### [Advantageous Effects]

According to the present invention, the electric cooking appliance having the temperature sensor and the automatic opening/closing device includes the temperature sensor elastically supported against the lower portion of the interior of the lid by means of the spring and the hotplate having the bolt and temperature sensor tube insertion member formed thereon to support the temperature sensor thereagainst and the handle having the connection bar disposed thereon in such a manner as to be bolt-fastened to the lid detachable part to easily detachably mount the hotplate onto the lid, thereby permitting the temperature and time to be set appropriately according to a material to be cooked, so that the cooked material has perfect taste, and also maximizing a warmth keeping efficiency and a user's conveniences.

### [Description of Drawings]

FIG.1 is a sectional view showing a conventional electric pressure cooker.
FIG.2 is a cutaway view showing a lid of an electric cooking appliance according to the present invention.
FIG.3 is a cutaway view showing a state where a hotplate is separated from the lid of the electric cooking appliance of FIG.2.
FIG.4 is a sectional view showing an automatic opening/closing device disposed in the lid of the electric cooking appliance according to the present invention.
FIG.5 is an enlarged view showing a portion "A" of FIG.2.
FIG.6 is an exploded perspective view showing a temperature sensor of the electric cooking appliance according to the present invention.
FIG.7 is a perspective view showing the temperature sensor of the electric cooking appliance according to the present invention.
FIG.8 is a sectional view showing a coupling state between the lid and the hotplate of the electric cooking appliance according to the present invention.
FIG.9 is a cutaway view showing a state where the hotplate is separated from the lid of the electric cooking appliance of FIG.8.
FIG.10 is a bottom view showing the hotplate of the electric cooking appliance according to the present invention.

**<Explanations on main reference numerals in the drawing>**

| | |
|---|---|
| 100: lid | 200: temperature sensor |
| 210: fixed member | 211: bolt fastening piece |
| 211a: bolt hole | 212: coupling portion |
| 213: guide hole | 220: guide member |
| 221: spring seating portion | 222: guide bar |
| 230: temperature sensor tube | |
| 230a: temperature sensing portion | |
| 231: temperature sensing element | 240: nut |
| 250: bolt and temperature sensing insertion member | |
| 251: temperature sensor insertion portion | |
| 252: temperature sensing surface | |
| 300: automatic opening/closing device | |
| 310: housing | 320: pressure opening/closing driver |
| 321: upper pressure adjusting part | |
| 322: lower sealing part | 322a: steam outlet |
| 330: vacuum releasing driver | 331: upper vacuum releasing part |
| 331: upper vacuum releasing part | 332: lower vacuum sealing part |
| 332a: air inlet | 340: height operating connector |
| 350: handle | 400: hotplate |
| 401: upper heater | 410: sealing ring |
| 420: lid detachable part | 421: handle |
| 422: connection bar | B: bolt |
| S: spring | |

### [Best Mode for Invention]

Hereinafter, the present invention will now be described in detail with reference to the attached drawing.

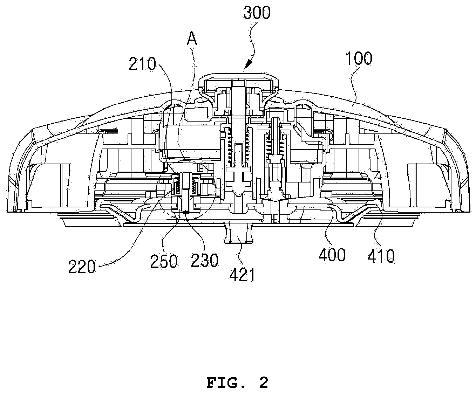

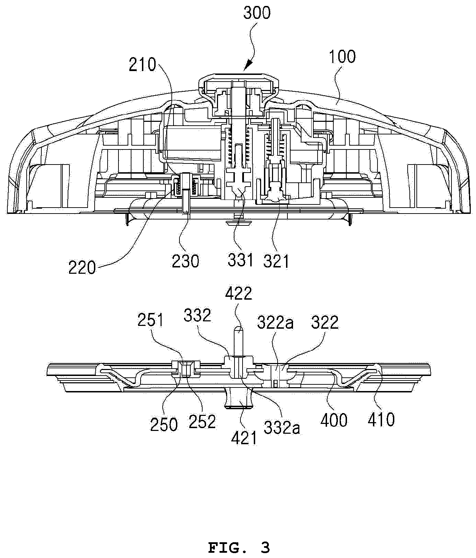

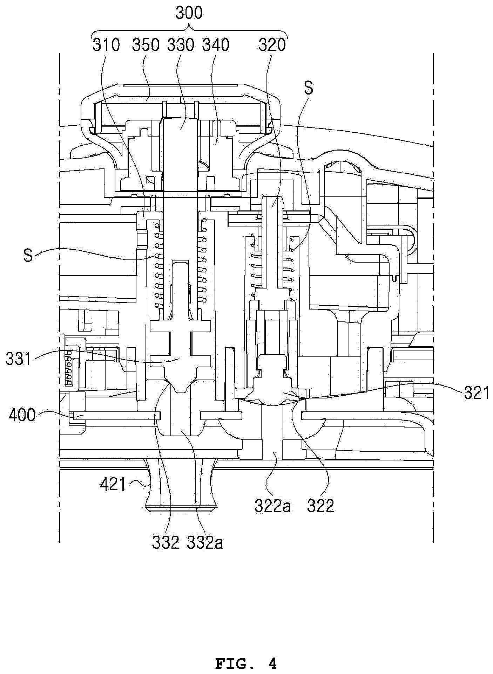

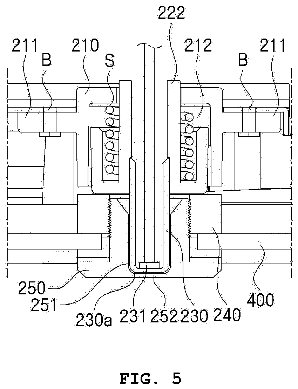

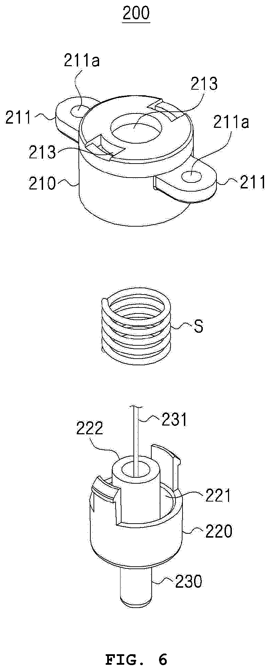

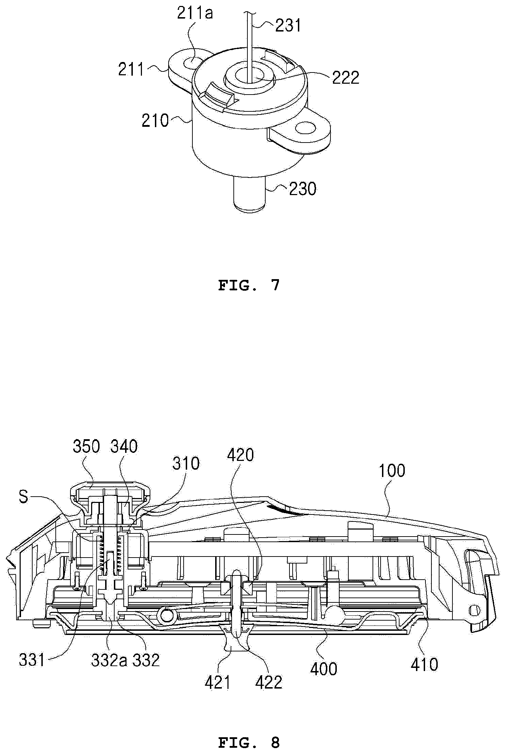

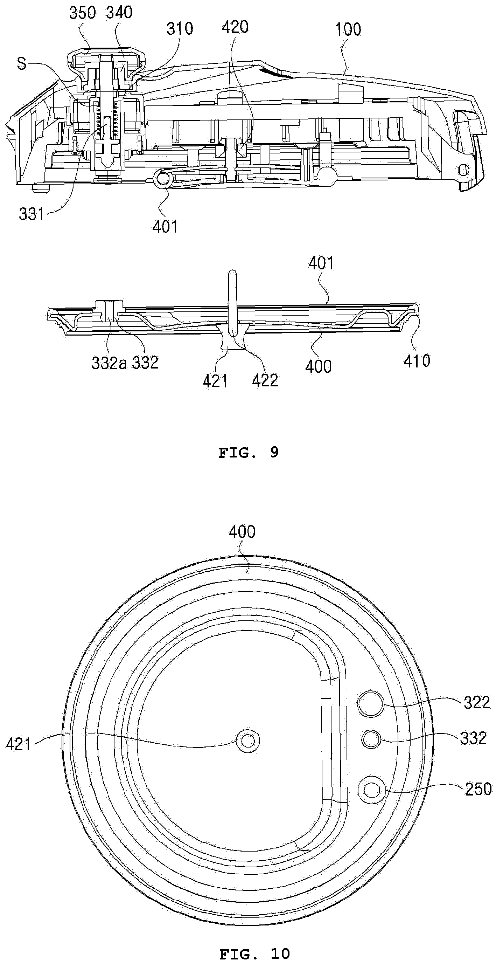

FIG.2 is a cutaway view showing a lid of an electric cooking appliance according to the present invention, FIG.3 is a cutaway view showing a state where a hotplate is separated from the lid of the electric cooking appliance of FIG.2, FIG.4 is a sectional view showing an automatic opening/closing device disposed in the lid of the electric cooking appliance according to the present invention, FIG.5 is an enlarged view showing a portion "A" of FIG.2, FIG.6 is an exploded perspective view showing a temperature sensor of the electric cooking appliance according to the present invention, FIG.7 is a perspective view showing the temperature sensor of the electric cooking appliance according to the present invention, FIG.8 is a sectional view showing a coupling state between the lid and the hotplate of the electric cooking appliance according to the present invention, FIG.9 is a cutaway view showing a state where the hotplate is separated from the lid of the electric cooking appliance of FIG.8, and FIG.10 is a bottom view showing the hotplate of the electric cooking appliance according to the present invention.

As shown in FIGS.2 to 9, an electric cooking appliance having a temperature sensor and an automatic opening/closing device according to the present invention includes a lid 100, the temperature sensor 200, the automatic opening/closing device 300, and a hotplate 400.

The lid 100 is disposed on top of a body (not shown) of the electric cooking appliance to seal the interior of the body.

The temperature sensor 200 is disposed at a lower portion of an interior of the lid 100 to sense an internal temperature of the body.

As shown in FIGS.5 to 7, the temperature sensor 200 includes a fixed member 210, a guide member 220, and a temperature sensor tube 230.

The fixed member 210 is fixed to the interior of the lid 100 by means of bolts B and has bolt fastening pieces 211 formed on both sides of the upper portion thereof in such a manner as to be fixedly fastened to the lid 100 through the bolts B.

In detail, the bolt fastening pieces 211 are located at the interior of the lid 100, and next, the bolts B are inserted into bolt holes 211a formed on the bolt fastening pieces 211, so that the fixed member 210 is fastenedly fixed to the lid 100.

Further, the fixed member 210 has a coupling portion 212 formed at the interior thereof in such a manner as to be coupled to the guide member 220.

Moreover, the fixed member includes a guide hole 213 formed thereon to guide the guide member 220 upward and downward.

The guide member 220 is coupled to the interior of the fixed member 210 fixed to the lid 100 so that it is guided upward and downward.

At this time, a spring S is disposed at the interiors of the guide member 220 and the fixed member 210 to allow the guide member 220 to be elastically supported against the fixed member 210.

The guide member 220 has a spring seating portion 221 formed at the interior thereof to seat the spring S thereonto.

Further, the guide member 220 has a guide bar 222 disposed at the interior of the spring seating portion 221 to guide the spring S at the interior of the fixed member 210, while preventing the spring S from moving when the spring S is seated.

In the state where the spring S is seated onto the spring seating portion 221 of the guide member 220, accordingly, the guide member 220 is inserted into the interior of the fixed member 210 and is then guided upward and downward, while being elastically supported by means of the spring S.

On the other hand, a nut 240 is disposed on the underside of the guide member 220 in such a manner as to be located between the lower portion of the lid 100 and top of the hotplate 400 to support the guide member 220 thereagainst.

At this time, the nut 240 is desirably made of a nonconductive material so that hot air is not transmitted to the lid 100.

The temperature sensor tube 230 is disposed on the lower side of the guide member 220.

Further, the temperature sensor tube 230 has a temperature sensing portion 230a formed on the underside thereof to control an internal temperature of an inner pot of the electric cooking appliance.

Furthermore, the temperature sensor tube 230 has a temperature sensing element 231 disposed at the interior thereof in such a manner as to be electrically connected thereto to sense the internal temperature of the electric cooking appliance.

At this time, the temperature sensing element 231 is insertedly brought into close contact with the bottom of the temperature sensor tube 230 and is then fixed to the interior of the temperature sensor tube 230 by means of epoxy injection, so that it does not escape from the temperature sensor tube 230.

As shown in FIGS.2 to 4, the automatic opening/closing device 300 includes a housing 310, a pressure opening/closing driver 320, a vacuum releasing driver 330, and a height operating connector 340.

The housing 310 is disposed inside the lid 100 in such a manner as to allow the top portion thereof to be connected to a handle 350 protruding outward from the lid 100 to operate the automatic opening/closing device 300.

The pressure opening/closing driver 320 is disposed inside the housing 310 in such a manner as to be ascended and descended according to a steam pressure upon cooking to allow an upper pressure adjusting part 321 to open and close a steam outlet 322a of a lower closing part 322.

The vacuum releasing driver 330 is disposed inside the housing 310 in such a manner as to be ascended and descended according to the rotation of the handle 350 to allow an upper vacuum releasing part 331 to open and close an air inlet 332a of a lower vacuum sealing part 332.

The height operating connector 340 is disposed on top of the housing 310 and is fixed to the handle 350 to ascend and descend the vacuum releasing driver 330.

Further, a spring S is disposed inside the pressure opening/closing driver 320 to elastically support the pressure opening/closing driver 320.

Furthermore, a spring S is disposed inside the vacuum releasing driver 330 to elastically support the vacuum releasing driver 330.

The hotplate 400 is detachably mounted on the underside of the lid 100.

Also, a sealing ring 410 is disposed along the outer circumference of the hotplate 400 to increase a warmth keeping efficiency.

The hotplate 400 has a bolt and temperature sensor tube insertion member 250 formed thereon in such a manner as to be fastened to the nut 240 to supportedly insert the temperature sensor tube 230 thereinto.

Accordingly, the bolt and temperature sensor tube insertion member 250 has a temperature sensor tube insertion portion 251 formed at the interior thereof in such a manner as to insert the temperature sensor tube 230 to sense the internal temperature of the electric cooking appliance.

At this time, the temperature sensor tube insertion portion 251 is penetratedly formed into top of the bolt and temperature sensor tube insertion member 250, and so as to allow the temperature sensing element 231 to easily sense the internal temperature of the electric cooling appliance, without any escape of the temperature sensor tube 230, a temperature sensing surface 252 is formed to a given low height on the bottom of the bolt and temperature sensor tube insertion member 250 in which the temperature sensor tube insertion portion 251 is formed.

In detail, the temperature sensing surface 252 is formed to the low height, without any hole, on the bottom of the bolt and temperature sensor tube insertion member 250, and accordingly, the temperature sensing element 231 is inserted into the temperature sensor tube insertion portion 251 and comes into close contact with the temperature sensing surface 252, so that through the temperature sensing surface 252, the temperature sensing element 231 senses and measures the internal temperature of the electric cooking appliance.

As shown in FIGS.8 to 10, a lid detachable part 420 is disposed at the center of the lower portion of the lid 100 to easily detachably mount the hotplate 400 connected to the underside of the lid 100 onto the lid 100.

Further, a handle 421 is disposed on the underside of the hotplate 400 to detachably mount the hotplate 400 onto the lid 100, and a connection bar 422 is disposed on the upper portion of the handle 421 in such a manner as to be inserted into the interior of the lid 100 to allow the hotplate 400 to be connected to the lid 100.

The connection bar 422 is fastened to the lid detachable part 420 by means of bolting so as to easily detachably mount the hotplate 400 onto the lid 100.

On the other hand, an upper heater 401 is disposed on the lower portion of the lid 100 to transmit a temperature generated according to a cooking state to the hotplate 400, so that a set temperature can be adjusted.

Under the above-mentioned configuration, now, an explanation on the operating state of the electric cooking appliance having the temperature sensor and the automatic opening/closing device according to the present invention will be given below.

The temperature sensor 200 is disposed at the lower portion of the interior of the lid 100 in such a manner as to be elastically supported by means of the spring S to sense the internal temperature of the electric cooking appliance, and next, the temperature sensor 200 is supportedly coupled to the bolt and temperature sensor tube insertion member 250 fastened to the hotplate 400, so that through the elasticity of the spring S, the temperature sensor tube 230 is brought into close contact with the temperature sensing surface 252 formed on the bottom of the bolt and temperature sensor tube insertion member 250, to the maximum degree, through the temperature sensor tube insertion portion 251, thereby allowing the internal temperature of the electric cooking appliance to be accurately measured.

Further, the handle 350 disposed on the lid 100 rotates to allow the lid 100 to be locked/unlocked onto/from the body (not shown) of the electric cooking appliance.

Like this, if the handle 350 rotates to open the lid 100 in the state where the vacuum releasing driver 330 of the automatic opening/closing device 300 is connected to the handle 350 at the interior of the lid 100, the internal pressure of the electric cooking appliance is discharged to release the vacuum state of the body of the electric cooking appliance, thereby opening the lid 100.

Accordingly, the handle 350 rotates according to the operation of the automatic opening/closing device 300 disposed inside the lid 100 and connected to the handle 350, so that the vacuum state of the body is released to open the lid 100. After the operation, next, the handle 350 is automatically returned to its original position by means of the elastic force of the spring S to allow the interior of the body to be in a vacuum state, thereby enhancing the warmth keeping efficiency.

If the handle 421 is taken and turned, further, the connection bar 422, which is disposed at the lower portion of the lid 100 and is thus fastened to the lid detachable part 420 by means of bolting, escapes from the lid 100, so that the hotplate 400 can be simply separated from the lid 100.

Accordingly, the hotplate 400 is easily separated from the lid 100, so that foreign matters attached to the hotplate 400 and the lid 100 can be easily removed to extend a life term of the product and they cannot stick to the cooked material to provide the cooked material with the best texture.

At the time when the hotplate 400 separated from the lid 100 is mounted on the lid 100, further, the handle 421 is simply turned to fasten the hotplate 400 to the lid 100, thereby making it convenient to use.

When the hotplate 400 is mounted on the lid 100, the connection bar 422 is bolt-fastened to the lid detachable part 420, so that the hotplate 400 can be mounted on the lid 100, and next, the temperature sensor tube 230 of the temperature sensor 200 is inserted into the temperature sensor tube insertion portion 251 of the bolt and temperature sensor tube insertion member 250. In this case, if the connection bar 422 and the temperature sensor 200 become correct in position, the pressure opening/closing driver 320 and the vacuum releasing driver 330 are automatically located accurately on the steam outlet 322a of the lower sealing part 322 and the air inlet 332a of the lower vacuum sealing part 332, thereby maintaining the vacuum state.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An electric cooking appliance having a temperature sensor and an automatic opening/closing device, comprising:
the temperature sensor disposed at a lower portion of an interior of a lid to control an internal temperature thereof;
the automatic opening/closing device disposed at an upper side of the interior of the lid and having an upper pressure adjusting part disposed thereon so that the upper pressure adjusting part is ascended according to a pressure to discharge steam, and if the pressure reaches a given pressure value, the upper pressure adjusting part is automatically sealed to keep a vacuum state; and
a hotplate detachably mounted on the underside of the lid and having a sealing ring disposed along the outer circumference thereof,
wherein if the lid is mounted thereon in such a manner as to allow the temperature sensor to be inserted thereinto, the upper pressure adjusting part of the automatic opening/closing device is accurately positioned at a lower sealing part and an upper vacuum releasing part of the automatic opening/closing device is accurately positioned at a lower vacuum sealing part, so that the vacuum state is maintained.

2. The electric cooking appliance according to claim 1, wherein the temperature sensor comprises:
a fixed member fixed to the interior of the lid by means of bolts;
a guide member coupled to the interior of the fixed member;
a temperature sensor tube disposed on the lower side of the guide member and having a temperature sensing portion formed on the underside thereof to control an internal temperature of an inner pot of the electric cooking appliance;
a temperature sensing element fixed to the interior of the temperature sensor tube by means of epoxy;
a spring disposed at the interiors of the fixed member and the guide member to elastically support the guide member;
a nut disposed on the underside of the guide member to support the guide member thereagainst; and
a bolt and temperature sensor tube insertion member fastened to the nut and the hotplate in such a manner as to supportedly insert the temperature sensor tube thereinto.

3. The electric cooking appliance according to claim 2, wherein the fixed member comprises: bolt fastening pieces formed on both sides thereof in such a manner as to be fastened to the bolts; a coupling portion formed at the interior thereof in such a manner as to be coupled to the guide member; and a guide hole formed thereon to guide the guide member upward and downward.

4. The electric cooking appliance according to claim 2, wherein the guide member comprises: a spring seating portion formed at the interior thereof to seat the spring thereonto; and a guide bar disposed at the interior of the spring seating portion, in which the spring is seated, to guide the spring at the interior of the fixed member.

5. The electric cooking appliance according to claim 2, wherein the bolt and temperature sensor tube insertion member comprises: a temperature sensor tube insertion portion formed therein to insert the temperature sensor tube thereinto; and a temperature sensing surface formed on the bottom thereof in such a manner as to come into close contact with the underside of the temperature sensor tube to sense the temperature.

6. The electric cooking appliance according to claim 1, wherein the automatic opening/closing device comprises:
a housing disposed inside the lid;
a pressure opening/closing driver disposed inside the housing in such a manner as to be ascended and descended according to a steam pressure upon cooking to allow the upper pressure adjusting part to open and close a steam outlet of the lower sealing part;
a vacuum releasing driver disposed inside the housing in such a manner as to be ascended and descended according to the rotation of a handle protruding outward from the lid to allow the upper vacuum releasing part to open and close an air inlet of the lower vacuum sealing part;
springs disposed inside the pressure opening/closing driver and the vacuum releasing driver to elastically support the pressure opening/closing driver and the vacuum releasing driver; and
a height operating connector disposed on top of the housing in such a manner as to be fixed to the handle to ascend and descend the vacuum releasing driver.

7. The electric cooking appliance according to claim 1, wherein the hotplate comprises: a lid detachable part disposed at the center of the lower portion of the lid to detachably mount the hotplate onto the lid; a handle disposed on the center of the underside thereof; and a connection bar disposed on the upper portion of the handle in such a manner as to be fastened to the lid detachable part by means of bolting.

8. The electric cooking appliance according to claim 1, wherein the hotplate comprises an upper heater disposed on the lower portion of the lid to transmit a temperature generated according to a cooking state so that a set temperature is adjusted.
